# EUROPEAN PATENT APPLICATION

(11) **EP 3 693 441 A1**
(43) Date of publication of application: **12.08.2020**
(21) Application number: 19156210.7
(22) Date of filing: 08.02.2019
(51) Int. Cl.: C10G 1/00, C07C 41/01, C07G 1/00, C10B 53/02, C10G 1/02, C12P 7/00, D21C 11/00, C08L 97/00, C08H 7/00, C08H 8/00

(54) **PROCESS FOR THE PRODUCTION OF A BIO-OIL**

(71) Applicant: SCA Forest Products AB, 851 88 Sundsvall (SE)
(72) Inventor: KUMAR, Shishil, 90732 Umeå (SE); KUGGE, Christian, 862 32 Kvissleby (SE)
(74) Representative: Weickmann & Weickmann PartmbB

(57) **Abstract**

The present invention relates to a process for producing bio oil comprising depolymerized lignin and a unit for producing bio-oil.

## Description

The present invention relates to a process for producing bio oil comprising depolymerized lignin and a unit for producing bio-oil.

Lignin is one of the two major components of lignocellulose in plants. Structurally it is a class of complex cross-linked phenolic polymers. From an energy point of view lignin has a high C/O ratio and accounts for a substantial proportion of carbon-based energy in lignocellulose. In the past however, lignin has only been considered as by-product of the pulp and paper industry. Only a minor amount of lignin produced by the pulp and paper industry was utilized commercially and the remainder was used as a low-value fuel. Recently, efforts have been made to recover lignin and convert it to bio-oil.

WO 2017/048163 and WO 2017/048164 describe processes for producing a bio-oil from lignin wherein a composition comprising kraft black liquor and an acidifying agent is treated in a reactor, optionally in the presence of H₂ and/or CO and optionally in the presence of a catalyst, thereby causing depolymerization of lignin in the black liquor composition and recovering a bio-oil comprising said depolymerized lignin.

There is, however, still a need to provide economically feasible methods for the production of a bio-oil comprising depolymerized lignin.

### Summary of the invention

The present invention provides novel processes for producing bio-oil from a lignin containing starting material having improved efficacy and/or economic feasibility compared to known processes. Further, the present invention provides novel units for producing bio-oil adapted for carrying out these novel processes.

The present inventors have found that the maximum running time of a lignin-depolymerization reactor is increased to a large extent, when the reactor is operated in an up-flow mode, i.e. when a lignin-containing composition is introduced into a lower portion of the reactor and passed through the reactor in an upward direction and removed from an upper portion of the reactor. By this means, the formation of deposits and clogging within the reactor can be avoided or reduced to a large extent. A further increase in the maximum running time may be achieved when the reactor is operated with a vertical temperature gradient, particularly under conditions where a lower temperature is provided in the lower reactor portion and a higher temperature is provided in the upper reactor portion.

Further, the present inventors have found that when simultaneously adding an acidifying agent and at least one organic extracting agent to a composition comprising depolymerized lignin an excess foaming may be avoided.

Furthermore, the present inventors have found that the efficacy of washing and desalting an oil composition comprising depolymerized lignin may be increased by contacting a composition comprising depolymerized lignin with an aqueous washing liquid before recovering an oil phase by phase separation. The aqueous washing liquid may be recycled, e.g. partially recycled, and reused several times. The aqueous washing liquid may contain a metal chelator such as EDTA and/or an organic acid to bind and remove metal ions present in the oil composition.

A first aspect of the present invention relates to a process for producing bio-oil comprising the steps of:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained, wherein the reactor is operated in an up-flow mode, comprising introducing the composition into a lower portion of the reactor, passing the composition through the reactor in an upward direction and removing the composition from an upper portion of the reactor,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin.

A second aspect of the present invention relates to a process for producing bio-oil comprising the steps:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) simultaneously adding at least one acidifying agent for pH adjustment, and at least one organic extracting agent to the bio-oil composition,
(e) optionally filtering the oil phase,
(f) obtaining an oil phase from the bio-oil composition by phase-separation, wherein the oil phase comprises depolymerized lignin and an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin.

A third aspect of the present invention relates to a process for producing bio-oil comprising the steps:
(a) providing a lignin-containing composition having an alkaline pH,
(b) passing the lignin-containing composition through a reactor under conditions of elevated temperature and elevated pressure, thereby causing depolymerization of the lignin, wherein a bio-oil composition comprising depolymerized lignin is obtained,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) washing and desalting the oil phase comprising (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material, wherein the aqueous washing liquid optionally comprises a chelator such as EDTA and/or an organic acid,
(h) optionally adding an organic diluent to the oil phase,
(i) optionally evaporating the organic extracting agent comprised in the oil phase, and
(j) obtaining a bio-oil comprising depolymerized lignin.

According to the present invention it is contemplated, that the characterizing features of the above first, second, and/or third aspects may be combined.

A fourth aspect of the invention is a unit for producing bio oil comprising:
(a) a container for providing a lignin-containing composition having an alkaline pH, and optionally including means for adding further components to the composition,
(b) a reactor adapted for operation under conditions of elevated temperature and elevated pressure and for producing a bio-oil composition comprising depolymerized lignin,
   wherein the reactor is adapted for operation in an up-flow mode, and comprises an inlet for introducing the lignin-containing composition from the container (a) into a lower reactor portion, and an outlet for removing the bio-oil composition from an upper reactor portion,
(c) optionally a condenser adapted for cooling the bio-oil composition from the reactor (b) and for removing gaseous components therefrom,
(d) optionally a mixing device adapted for adding at least one acidifying agent for pH adjustment, and/or for adding at least one organic extracting agent to the composition from the reactor (b) or the condenser (c), if present,
(e) optionally a filtration device adapted for filtering the oil phase from the mixing device (d),
(f) a separator adapted for obtaining an oil phase from the bio-oil composition by phase separation, wherein the oil phase comprises depolymerized lignin and optionally an organic extracting agent,
(g) optionally a desalting device adapted for desalting the oil phase from the separator (f),
(h) optionally a mixing device adapted for adding an organic diluent to the oil-phase from the separator (f),
(i) optionally an evaporator adapted for evaporating the organic extracting agent comprised in the oil phase from the separator (f), and optionally recycling the evaporated organic extracting agent to mixing device (d) and
(j) optionally a container for collecting bio-oil comprising depolymerized lignin.

### Detailed description

The present invention relates to the production of a bio-oil comprising depolymerized lignin. According to step (a) a starting material is provided which is a lignin-containing composition having an alkaline pH, e.g. a pH of about 8 to about 14, a pH of about 10 to about 14 or of about 12 to about 14. The lignin-containing composition may be any suitable lignin-containing composition, e.g. a lignin containing composition resulting from a papermaking process, particularly a black liquor composition, e.g. a kraft black liquor composition, i.e. a black liquor composition from a kraft pulping process, sulfite pulping process, soda pulping process, organosolv biorefinery process and/or ethanol biorefinery process. The lignin-containing composition may also be derived from dissolving a dry lignin in a suitable aqueous solvent, e.g. dry lignin obtained from the LignoBoost process, dry lignin from a lignin first biorefinery process and/or a dry lignin from a sugar first biorefinery process.

According to the present invention, further components may be added to the lignin containing composition. In certain embodiments, lignin-derived components, e.g. solid lignin powder may be added to the liquid composition in order to increase the lignin content thereof. Different types of lignin powder are available, e.g. as described in WO 2017/48163. On the other hand, the lignin-containing composition may be diluted, e.g. by adding water in order to decrease the lignin content thereof. In a specific embodiment, the lignin-derived component may be selected from a partially depolymerized lignin oil or a depolymerized and partially hydrotreated, e.g. partly deoxygenated and partly desulfurized oil. For example, lignin-derived components may be added in an amount of about to 100 weight-% based on the Klason lignin content originally present in the composition. Particularly, these compounds may be added in an amount of about 10 weight-% to about 100 weight-%, more particularly in an amount of about 20 weight-% to about 70 weight-%, based on the Klason lignin weight content originally present in the composition.

If desired, at least one further component, i.e. a non-lignin derived component may be added to the lignin-containing composition e.g. as described in WO 2017/48163. This further component may be selected from a carbonium and/or arenium ion scavenger, a radical scavenger, a lubricant, an oxygen atom transfer agent, a rosin containing oil and any combination thereof. The further component may be added in an amount of up to about 100 weight-%, particularly in an amount of about 10 weight-% to about 100 weight-%, more particularly in an amount of about 5 weight-% to about 30 weight-%, based on the Klason lignin weight content in the lignin-containing composition.

In a specific embodiment, the further component may be selected from rosin containing oils, particularly tall oil and any product derived therefrom comprising rosin constituents, particularly resin acids, e.g. abietic acid and/or pimaric acid. For example, the rosin-containing oil may be selected from crude tall oil and fractions of crude tall oil such as tall oil pitch, tall oil rosin, tall oil fatty acids, crude sulphate turpentine and/or any combination thereof.

In certain embodiments, the further component may be a carbonium and/or arenium ion scavenger or a radical scavenger, Examples of carbonium and/or arenium ion scavengers are aromatic hydrocarbons or alcohols such as phenol, 2-naphthol, catechol, methylcatechol, thymol, anisole, guaiacol, cresol, toluene, o-, m-, p-xylene, p-cymene or any combination thereof. Examples of radical scavengers are stilbenoids, such as piceatannol, methylpiceatannol or resveratrol, or any combination thereof. Examples of lubricants are toluene, o-, m-, p-xylene, p-cymene, gasoline, diesel or any combination thereof. Examples of oxygen atom transfer agents are anthraquinone, a tannine, menadione, quercetin or any combination thereof.

With regard to these further components specific reference is made to WO 2017/048163.

In certain embodiments, the lignin-containing composition which is provided according to step (a) and passed to the depolymerization reactor according to step (b) may have a dry solid content in the range of about 15 weight-% to about 60 weight-%, particularly of about 20 weight-% to about 50 weight-%, more particularly of about 35 weight-% to about 45 weight-%, e.g. about 40 weight-% based on the total weight of the lignin-containing composition.

Further, in certain embodiments, the lignin-containing composition which is provided according to step (a) and passed to the depolymerization reactor according to step (b) may have a Klason lignin content in the range of about 50 g/kg to about 300 g/kg, particularly of about 100 g/kg to about 200 g/kg based on the total volume of the lignin-containing composition. The Klason lignin content may be determined gravimetrically according to the SCAN-CM 71 method (Scandinavian Pulp, Paper and Board Testing Committee).

Step (b) of the process of the invention comprises passing the lignin-containing composition through a reactor under conditions of elevated temperature and elevated pressure, thereby causing depolymerization of the lignin, wherein a bio-oil composition comprising depolymerized lignin is obtained.

According to the first aspect of the present invention, the reactor is operated in an up-flow mode comprising introducing the composition into a lower portion of the reactor, passing the composition through the reactor in an upward direction and removing the composition from an upper portion of the reactor. In this context, the term "lower portion of the reactor" particularly refers to a position which is between the bottom of the reactor and a position which is about 30% upwards from the bottom of the reactor based on the total height of the reactor. The term "upper portion of the reactor" particularly refers to a position which is between the top of the reactor and a position which is about 30% downwards from the top of the reactor based on the total height of the reactor. In a particular embodiment, the composition may be introduced into the bottom of the reactor, passed through the reactor in an upward direction and removed from the top of the reactor. In a particular embodiment, the reactor is a vertical reactor.

When operating the lignin-depolymerization reactor in an up-flow mode as described above, the maximum running time of the reactor, e.g. the time until occurrence of a significant pressure drop within the reactor of about 10 bar or higher may be extended to several months even in case the reactor is fed with a composition having a dry solid content of 40 weight-% or more. This effect appears to be caused by a reduced deposition of solids within the reactor.

The depolymerization reaction in step (b) is carried out under conditions of elevated temperature and elevated pressure which are suitable for conducting the depolymerization reaction. The term "elevated temperature" relates to a temperature which is elevated compared to room temperature and the term "elevated pressure" relates to a pressure which is elevated compared to atmospheric pressure. Particularly, the reactor is kept at a temperature between about 180°C and about 360°C, more particularly between about 200°C and about 280°C and at a pressure between about 40 bar and about 160 bar, more particularly between about 80 bar and about 120 bar, optionally in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, e.g. in the presence of a reducing gas such as H₂ or H₂/CO, particularly in the presence of H₂, and optionally in the presence of a catalyst. For the depolymerization of lignin a wide range of catalysts can be used such as a noble metal on a support such as a carbon-based support, e.g. activated carbon, charcoal, graphene, carbon nanotubes, or graphite, or a metal oxide-based support such as alumina, aluminum phosphate, zeolite, hydrotalcite, hydroxyapatite, magnesium oxide, zirconia, titanium dioxide, ceria, chromite or molybdite. Other possible catalysts are transition metals such as V, Cr, Fe, Co, Ni, Cu, Zn, Zr, Nb, Mo and W or transition metal oxides such as NiO on any of the previously mentioned supports, as well as unsupported metal, metal oxide, metal carbide or metal nitride particles wherein the metal is particularly a transition metal. Further unsupported catalysts that are suitable are Co-Mo-S, MoS₂, VS₂, Ni-Mo and Fe-Cu catalysts.

In particular embodiments of the present invention the reactor in step (b) is operated with a vertical temperature gradient, more particularly under conditions where a lower temperature is in the lower reactor portion and a higher temperature is in the upper reactor portion. The temperature difference between the lower reactor portion and the upper reactor portion may be between about 5°C and about 60°C, particularly between about 20°C and about 40°C. For example, the reactor may be operated at a temperature at about 220°C at the bottom and about 250°C at the top.

The efficacy of the process may be further increased when in step (b) the reactor is flushed with an aqueous liquid, particularly with water, in suitable intervals, e.g. after an operation period of about 2 days to about 7 days.

After the depolymerization reaction, the composition may be cooled in step (c) to a temperature below the boiling point of an organic extraction agent which is added in subsequent step (d). The cooling may be performed in a condenser in which gaseous components such as H₂ and other non-condensable gases are removed.

Step (d) optionally comprises adding at least one acidifying agent for pH adjustment, e.g. for adjustment of the pH from about 3 to about 9, particularly from about 4 to about 7, is added to the composition. The acidifying agent may be selected from H₂SO₄, CO₂, SO₂, acidic process water having a pH of about 1 to about 3 or any combination thereof.

Further, step (d) optionally comprises the addition of an organic extracting agent which is substantially non-miscible with water. In certain embodiments, the extracting agent is a low-boiling polar and/or aromatic solvent which may have a boiling point of at least about 50°C or least about 70°C and up to about 90°C or up to about 120°C under atmospheric pressure. The low-boiling solvent may be selected from esters, ethers, ketones and alcohols, such as ethyl acetate, methyl tetrahydrofuran and isopropyl acetate or any combination thereof.

In particular embodiments, the organic extracting agent may be a lignin-derived oil, e.g. a bio-oil comprising depolymerized lignin which has been partially hydrotreated, e.g. partially deoxygenated and desulfurized. In further particular embodiments, the extracting agent may be a rosin-containing oil, e.g. a tall oil, including fractions thereof as described above. The invention also encompasses the addition of mixtures of a low-boiling solvent, a lignin-derived oil and/or a rosin-containing oil.

Usually, the organic extracting agent is added in excess to the mass of bio-oil composition, e.g. in an amount of about 50 weight-% or more, e.g. up to about 200 weight-% based on the total weight of the bio-oil composition.

In particular embodiments, step (d) comprises adding at least one acidifying agent and an organic extracting agent.

According to the second aspect of the invention, the acidifying agent and the organic extracting agent are added substantially simultaneously to the composition thereby reducing and/or completely avoiding undesired foaming. The term "simultaneous addition" in this context is particularly to be understood, that both agents are at least partially added within a common time period. The acidifying agent and/or the organic extracting agent may be added at an elevated temperature, e.g. at a temperature of at least about 50°C up to a temperature which is just below the boiling point of the extracting agent.

After step (d) the composition is optionally subjected to a filtering step (e) which may be carried out by passing the composition through a filtration device, e.g. a filtration device having a mesh width of about 50 µm to about 200 µm such as about 70 µm.

Subsequently in step (f) a phase-separation is carried out. This phase-separation may comprise decanting the oil phase from a further phase, e.g. from an aqueous phase in a separator. The phase-separation may comprise separation the composition into an oil phase and at least one further phase, e.g. a phase comprising solids, particularly non-depolymerized lignin solids, and an aqueous phase comprising dissolved salts. These phases are withdrawn separately from the separator, thereby obtaining an oil phase comprising depolymerized lignin and organic extracting agent. In certain embodiments, the phase separation may be carried out as described in WO 2017/048163.

Subsequently, a desalting step (g) may be carried out. This step may comprise (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material. The aqueous washing liquid may contain a metal chelator such as EDTA and/or an organic acid such as formic acid, acetic acid, citric acid, oxalic acid and any mixture thereof to bind and remove metal ions such as Na⁺, K⁺ and Ca²⁺ present in the oil phase.

According to the third aspect of the invention, desalting in step (g) comprises (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material. This procedure results in an increased removal of undesired components such as salts from the oil phase and in an increased degree of purity of the bio-oil. The aqueous washing liquid may be at least partially recycled and reused several times. For example, a larger portion of the aqueous washing liquid may be recycled along with a smaller amount of fresh and salt-lean aqueous phase.

According to step (h) an organic diluent may be added to the oil phase. In certain embodiments, the organic diluent is added in an amount of about 20 to about 100 wt-% based on the weight of the oil phase. In certain embodiments, the organic diluent is a liquid having a lower volatility than a low-boiling organic extracting agent added in step (d). For example, the organic diluent may be selected from solvents, e.g. polar and/or aromatic solvents, having a boiling temperature of more than 100°C under atmospheric pressure such as benzyl alcohol, cresol and/or terpineol including isomers thereof. In particular embodiments, the organic diluent may be selected from lignin-derived oils, and/or non-lignin-derived oils, e.g. rosin-containing oils such as tall oil including fractions thereof as described above, and/or terpene-based oils including turpentine, turpentine fractions, and/or oxygenated turpentine.

Evaporation according to step (i) comprises evaporating the low boiling organic extracting agent from step (d) comprised in the oil phase. A higher boiling diluent which has been added to the composition in step (h), will not be evaporated, but will remain with the oil phase. The organic extracting agent separated from the oil phase may be recycled to step (d). In case only a lignin-derived oil and/or a rosin-containing oil have been added in step (d) as an organic extracting agent, the evaporation step (i) may be omitted.

Step (j) comprises obtaining bio-oil comprising depolymerized lignin and optionally non-evaporated organic extraction agent from step (d) and/or organic diluent from step (h). The depolymerized lignin obtained in step (j) has a weight average molecular weight which is substantially reduced compared to the weight average molecular weight of a depolymerized lignin added to the reactor in step (b). For example, the weight average molecular weight of the depolymerized lignin may be in the range of about 200 to about 2000 g/mol, e.g. about 250 to about 1000 g/mol, particularly of about 300 to about 800 g/mol.

The resulting bio-oil obtained in step (j) may be used for different applications such as a sizing agent for the production of hydrophobic paper, or for the manufacture of lignin nanoparticles or lignin softeners for e.g. plastics, or may be further processed to a hydrocarbon product, e.g. by hydrotreatment.

Hydrotreatment may, e.g. involve a treatment in the presence of a reducing gas such as H₂ and/or CO and a hydrotreatment catalyst at an elevated temperature, e.g. at a temperature between about 200°C to about 400°C, particularly between about 270°C and about 350°C. The product resulting from the hydrotreatment is a hydrocarbon product containing only minor amounts of nitrogen, sulfur and/or oxygen, for example 0.1 weight-% or less nitrogen, 0.05 weight-% or less sulfur and 0.2 weight-% or less oxygen. A partially hydrotreated lignin oil may contain, e.g. 0.5 wt% nitrogen, 0.5 wt% sulfur, 77 wt% carbon, 7 wt% hydrogen and 15 wt% oxygen.

The hydrocarbon product obtained from the hydrotreatment may be subjected to a phase separation wherein the product is separated into a gaseous phase comprising low boiling components, a liquid hydrocarbon product phase and an aqueous phase. The liquid hydrocarbon product may be subjected to a fractionation based on the boiling temperature. An exemplary hydrotreatment procedure is described in WO 2017/078582.

In a particular embodiment the process of the invention as described above is operated continuously.

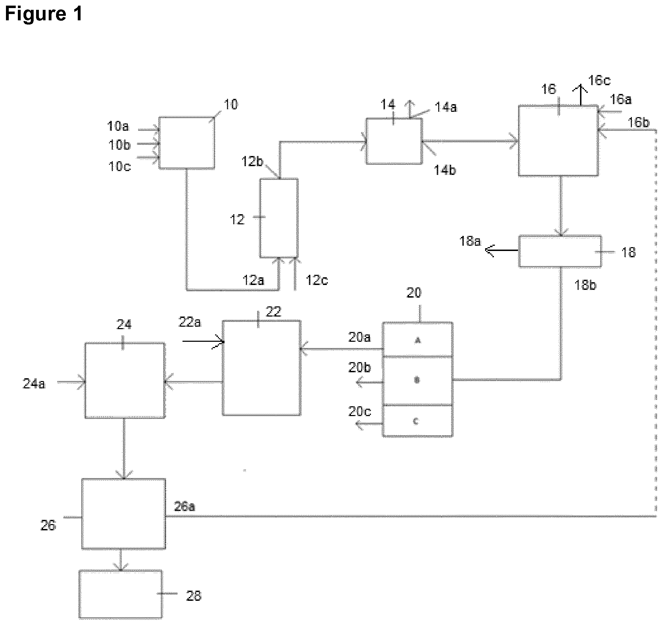

The fourth aspect of the invention relates to a unit for producing bio-oil. A particular embodiment of such a unit is schematically depicted in Figure 1. The unit comprises a container (10) for providing a lignin-containing composition. The container (10) may be formed as a mixing tank having several inlets (10a, 10b, 10c) for introducing the lignin-containing composition and further components. The lignin-containing composition is passed from container (10) to a lignin-depolymerization reactor (12) which is operated under conditions of elevated temperature and pressure. The reactor (12) comprises an inlet (12a) for introducing the lignin-containing composition into a lower reactor portion, particularly into the reactor bottom and an outlet (12b) for removing the composition from an upper reactor portion, particularly from the top of the reactor. Further, the reactor may comprise an inlet (12c) for introducing a reducing gas such as H₂ and/or CO under pressure.

The composition is then transferred from the reactor (12) to a condenser (14) where the composition is cooled, e.g. below 100°C and H₂ and other non-condensable gases are withdrawn via an outlet (14a). Thereafter, the liquid portion of the composition is withdrawn through an outlet (14b) and passed to a mixing device (16) adapted for adding at least one acidifying agent, e.g. by means of inlet (16a) and at least one organic extracting agent, e.g. by means of inlet (16b). Gases produced in the mixing device may be removed through an outlet (16c).

The acidified composition is then passed through an optional filtration device (18). The solids are removed through an outlet (18a) and the liquid stream (18b) is passed to a phase-separator (20). In the phase-separator (20) the composition separated into individual phases, particularly into an oil phase (A) and at least one further phase, e.g. a solid-containing phase (B) and a dissolved salt-containing aqueous phase (C). The oil phase (A) comprising the depolymerized lignin and the organic extracting agent is withdrawn from the separator (20), e.g. by decanting via outlet (20a). The further phases (B,C) may be withdrawn via respective outlets (20b, 20c).

The oil phase is passed to an optional desalting device (22) for reducing the salt content thereof. Desalting may encompass the addition of an aqueous washing liquid which is added as stream (22a) followed by phase-separation and/or passing the oil phase over an adsorbent and/or an ion exchange material (not shown). The washing liquid may be recycled and reused several times.

The oil phase may be passed to an optional mixing device (24) adapted for adding a high boiling organic diluent to the composition via inlet (24a). Thereafter, the oil phase comprising the depolymerized lignin, the organic extracting agent and optionally the organic diluent is passed to an evaporator (26) for evaporating at least a part of low-boiling organic extracting agent comprised in the oil phase. The evaporated organic extraction agent may be withdrawn via outlet (26a) and recycled to the mixing device (16) via inlet (16b). From the evaporator (26), the oil phase may be passed to a container (28) for collecting the product which is a bio-oil comprising depolymerized lignin.

Further, the unit may comprise a hydrotreatment reactor, optionally a phase separator and optionally a fractionation device (not shown) for producing a hydrocarbon product from the bio-oil.

The present invention is further defined by the following embodiments which are part of the specification
1. A process for producing bio-oil comprising the steps of:
   (a) providing a lignin-containing composition having an alkaline pH,
   (b) passing the lignin-containing composition through a reactor under conditions of elevated temperature and elevated pressure, thereby causing depolymerization of the lignin, wherein a bio-oil composition comprising depolymerized lignin is obtained, wherein the reactor is operated in an up-flow mode, comprising introducing the composition into a lower portion of the reactor, passing the composition through the reactor in an upward direction and removing the composition from an upper portion of the reactor,
   (c) optionally cooling the bio-oil composition and removing gaseous components therefrom,
   (d) optionally adding at least one acidifying agent for pH adjustment, and optionally adding at least one organic extracting agent to the bio-oil composition,
   (e) optionally filtering the oil phase,
   (f) obtaining an oil phase from the bio-oil composition by phase-separation, wherein the oil phase comprises depolymerized lignin and optionally an organic extracting agent,
   (g) optionally desalting the oil phase,
   (h) optionally adding an organic diluent to the oil phase,
   (i) optionally evaporating the organic extracting agent comprised in the oil phase, and
   (j) obtaining a bio-oil comprising depolymerized lignin, and comprising an organic diluent.
2. The process of embodiment 1 wherein the lignin-containing composition of step (a) is a black liquor composition.
3. The process of embodiment 1 or 2 wherein lignin powder or a lignin derived component is added to the black liquor composition in step (a), particularly in an amount of about 10 weight-% to about 100 weight-%, more particularly in an amount of about 20 weight-% to about 70 weight-% based on the Klason lignin content originally present in the lignin-containing composition.
4. The process of any one of the preceding embodiments wherein at least one further component selected from a scavenger, a lubricant, an oxygen atom transfer agent, and any combination thereof, is added to the lignin-containing composition in step (a), particularly in an amount up to about 100 weight-%, particularly in an amount of about 5 weight-% to about 30 weight-% based on the total Klason lignin content in the lignin-containing composition.
5. The process of any one of the preceding embodiments wherein the lignin-containing composition of step (a) has a pH of about 10 to about 14.
6. The process of any one of the preceding embodiments wherein the lignin-containing composition provided in step (a) comprises a Klason lignin content of about 50 g/kg to about 300 g/kg, particularly of about 100 g/kg to about 200 g/kg based on on the total volume of the composition.
7. The process of any one of the preceding embodiments wherein in step (b) the composition is introduced into the bottom of the reactor, passed through the reactor in an upward direction and removed from the top of the reactor.
8. The process of any one of the preceding embodiments wherein in step (b) the reactor is kept at a temperature between about 180°C and about 350°C and a pressure between about 40 bar and about 180 bar optionally in the presence of a gas such as H₂, CO, CO₂, N₂, NH₃, H₂S, moist syngas, mercaptans such as methanethiol, dimethylsulfide, dimethyldisulfide, SO₂, methane, ethane, propane, butane and any mixture thereof, e.g. in the presence of a reducing gas such as H₂ or H₂/CO and optionally in the presence of a catalyst.
9. The process of any one of the preceding embodiments wherein in step (b) the reactor is operated with a vertical temperature gradient, particularly under conditions where a lower temperature is in the lower reactor portion and a higher temperature is in the upper reactor portion.
10. The process of embodiment 9 wherein the temperature difference between the lower reactor portion and the upper reactor portion is between about 5°C and about 60°C, particularly between about 20°C and about 40°C.
11.The process of any one of the preceding embodiments wherein in step (b) the reactor is flushed with an aqueous liquid, e.g. after an operation period of about 2 to about 7 days.
12. The process of any one of the preceding embodiments wherein in step (c) the bio-oil composition is cooled below the boiling point of the organic extracting solvent to be added in step (d).
13. The process of any one of the preceding embodiments wherein the acidifying agent added in step (d) is selected from H₂SO₄, CO₂, SO₂, acidic process water having a pH of 1-3 or any combination thereof.
14. The process of any one of the preceding embodiments wherein the acidifying agent in step (d) is added in an amount to adjust a pH from about 3 to about 9, particularly from about 4 to about 7.
15. The process of any one of the preceding embodiments wherein the organic extracting agent added in step (d) is substantially non-miscible with water.
16. The process of any one of the preceding embodiments wherein the organic extracting agent added in step (d) is a low-boiling organic solvent, particularly selected from esters, ethers, ketones and alcohols, e.g. ethyl acetate, methyl tetrahydrofuran, isopropyl acetate, and benzyl alcohol, or any combination thereof.
17. The process of any one of the preceding embodiments wherein the organic extracting agent in step (d) is added in excess to the total mass of the composition.
18. The process of any one of the preceding embodiments wherein the acidifying agent and the organic extracting agent are added substantially simultaneously in step (d) to the composition.
19. The process of any one of the preceding embodiments wherein in step (d) the acidifying agent and/or the organic extracting agent are added at an elevated temperature, e.g. at a temperature of about 50°C and up to below the boiling point of the extracting agent.
20. The process of any one of the preceding embodiments wherein in step (e) the composition is passed through a filtration device having a mesh width of about 50 µm to about 100 µm.
21. The process of any one of the preceding embodiments wherein the phase-separation in step (f) comprises separating the bio-oil composition into an oil phase and at least one further phase and decanting the oil phase from the further phase.
22. The process of any one of the preceding embodiments wherein the phase-separation in step (f) comprises separating the bio-oil composition into an oil phase, and at least one further phase, e.g. a first phase comprising solids, particularly non-depolymerized lignin solids, and a second aqueous phase comprising dissolved salts.
23. The process of any one of the preceding embodiments wherein desalting in step (g) comprises (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material, wherein the aqueous washing liquid may comprise a metal chelator and/or an organic acid.
24. The process of embodiment 23 wherein desalting in step (g) comprises (i) contacting the oil phase with an aqueous washing liquid and carrying out a phase-separation wherein the resulting mixture is separated into an oil phase and at least one aqueous phase, and subsequently (ii) contacting the composition with an adsorbent and/or an ion exchange material, wherein the aqueous washing liquid may comprise a metal chelator and/or an organic acid.
25. The process of embodiment 23 or 24 wherein the aqueous washing liquid is at least partially recycled and reused several times.
26. The process of any one of the preceding embodiments wherein the organic diluent added in step (h) is a liquid having a higher boiling point than a low-boiling extracting agent added in step (d).
27. The process of embodiment 26 wherein the organic diluent is selected from benzyl alcohol, cresol, terpineol including isomers thereof, a lignin-derived oil or any combination thereof.
28. The process of any one of the preceding embodiments wherein the organic extracting agent is recycled to step (d) after evaporation in step (i).
29. The process of any one of the preceding embodiments wherein the depolymerized lignin obtained in step (j) has a weight average molecular weight of about 200 to about 2000 g/mol, particularly of about 250 to about 1000 g/mol, more particularly of 300 to about 800 g/mol.
30. The process of any one of the preceding embodiments wherein the bio-oil obtained in step (j) is further processed to a hydrocarbon product.
31.The process of embodiment 30 wherein the bio-oil is subjected to hydrotreatment.
32. The process of embodiment 31 wherein the hydrotreatment comprises a treatment in the presence of a reducing gas such as H₂ and/or CO and a hydrotreatment catalyst at a temperature between about 220°C to about 400°C, particularly between about 270°C and about 350°C.
33. The process of embodiment 31 or 32 wherein the hydrocarbon product obtained from the hydrotreatment is subjected to a phase-separation wherein the product is separated into a gaseous phase, a liquid hydrocarbon product phase and an aqueous phase.
34. The process of embodiment 33 wherein the liquid hydrocarbon product is subjected to a fractionation.
35. A process for producing bio-oil comprising the steps:
   (a) providing a lignin-containing composition having an alkaline pH,
   (b) passing the lignin-containing composition through a reactor under conditions of elevated temperature and elevated pressure, thereby causing depolymerization of the lignin, wherein a bio-oil composition comprising depolymerized lignin is obtained,
   (c) optionally cooling the bio-oil composition and removing gaseous components therefrom,
   (d) simultaneously adding at least one acidifying agent for pH adjustment, and at least one organic extracting agent to the bio-oil composition,
   (e) optionally filtering the oil phase,
   (f) obtaining an oil phase from the bio-oil composition by phase-separation, wherein the oil phase comprises depolymerized lignin and an organic extracting agent,
   (g) optionally desalting the oil phase,
   (h) optionally adding an organic diluent to the oil phase,
   (i) optionally evaporating the organic extracting agent comprised in the oil phase, and
   (j) obtaining a bio-oil comprising depolymerized lignin.
36.A process for producing bio-oil comprising the steps:
   (a) providing a lignin-containing composition having an alkaline pH,
   (b) passing the lignin-containing composition through a reactor under conditions of elevated temperature and elevated pressure, thereby causing depolymerization of the lignin, wherein a bio-oil composition comprising depolymerized lignin is obtained,
   (c) optionally cooling the bio-oil composition and removing gaseous components therefrom,
   (d) optionally adding at least one acidifying agent for pH adjustment, and optionally adding at least one organic extracting agent to the bio-oil composition,
   (e) optionally filtering the oil phase,
   (f) obtaining an oil phase from the bio-oil composition by phase-separation, wherein the oil phase comprises depolymerized lignin and optionally an organic extracting agent,
   (g) washing and desalting the oil phase comprising (i) contacting the oil phase with an aqueous washing liquid and carrying out a phase-separation wherein the resulting mixture is separated into an oil phase and at least one aqueous phase, and subsequently (ii) contacting the oil phase with an adsorbent and/or an ion exchange material,
   (h) optionally adding an organic diluent to the oil phase,
   (i) optionally evaporating the organic extracting agent comprised in the oil phase, and
   (j) obtaining a bio-oil comprising depolymerized lignin.
37. The process of embodiment 36, wherein in step (g) the aqueous washing liquid is at least partially recycled and reused several times.
38. The process of any one of the preceding embodiments which is operated continuously.
39.A unit for producing bio-oil comprising:
   (a) a container for providing a lignin-containing composition having an alkaline pH, and optionally including means for adding further components to the composition,
   (b) a reactor adapted for operation under conditions of elevated temperature and elevated pressure and for producing a bio-oil composition comprising depolymerized lignin,
      wherein the reactor is adapted for operation in an up-flow mode, and comprises an inlet for introducing the lignin-containing composition from the container (a) into a lower reactor portion, and an outlet for removing the bio-oil composition from an upper reactor portion,
   (c) optionally a condenser adapted for cooling the bio-oil composition from the reactor (b) and for removing gaseous components therefrom,
   (d) optionally a mixing device adapted for adding at least one acidifying agent for pH adjustment, and/or for adding at least one organic extracting agent to the composition from the reactor (b) or the condenser (c), if present,
   (e) optionally a filtration device adapted for filtering the oil phase from the mixing device (d),
   (f) a separator adapted for obtaining an oil phase from the bio-oil composition by phase separation, wherein the oil phase comprises depolymerized lignin and optionally an organic extracting agent,
   (g) optionally a desalting device adapted for desalting the oil phase from the separator (f),
   (h) optionally a mixing device adapted for adding an organic diluent to the oil phase from the separator (f),
   (i) optionally an evaporator adapted for evaporating the organic extracting agent comprised in the oil phase from the separator (f), and optionally recycling the evaporated organic extracting agent to mixing device (d) and
   (j) optionally a container for collecting a bio-oil comprising depolymerized lignin.
40.A unit for producing a hydrocarbon product comprising the unit of embodiment 39 and further comprising:
   (k) a hydrotreatment reactor,
   (I) optionally a phase-separator, and
   (m) optionally a fractionation device.

### Examples

### Example 1

A lignin-depolymerization reactor was operated in down-flow mode, i.e. the reactor was fed from the top and the product was withdrawn from the bottom.

The following process conditions were used:
Black liquor (solid content 48 weight-%) was passed to a feed container after filtering it through a 70 µm filter. The feed container was continuously stirred. Water was added to the container for adjusting the desired solid content of the composition. The Klason lignin content of the initial black liquor feed was analyzed to be around 150 g/kg.

The mixture from the container was first pumped through a preheater before sending it to the reactor which was operated at around 235°C. The reactor was pressurized with hydrogen. Hydrogen was added to the liquid feed at a constant flow rate of 30 l/h (STP conditions). The liquid feed mass flow was 2.3 kg/h. The pressure in the reactor was 100 bar.

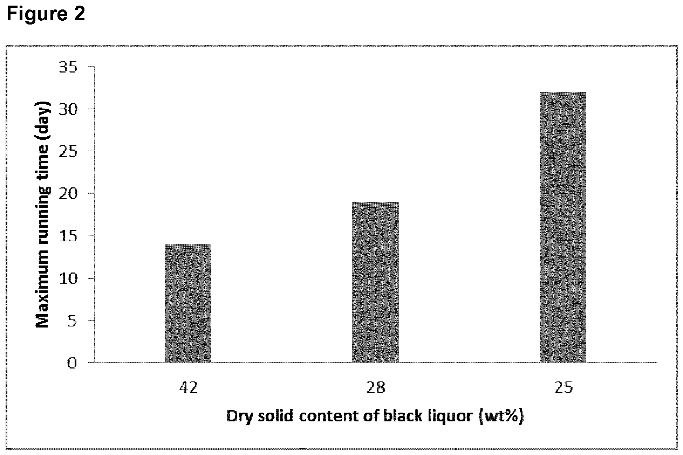

The maximum running time of the reactor was determined with different dry solid contents from 25 - 42 weight-% in the feed to the reactor. Figure 2 shows the running time of the reactor before it got clogged due to solid deposition inside the reactor, leading to a significant pressure drop (>10 bar).

A maximum running time of only 2 weeks could be obtained when running the reactor in down-flow mode with 42 weight-% dry solid content in the feed. During these two weeks the reactor was flushed with water every alternate day for 1 to 2 hrs.

We also tested the maximum running time of the reactor with lower dry solid contents of 28 weight-% and 25 weight-% in the feed. In these tests periodic water flushing was not done. Even when lowering dry solid content to 25 weight-%, we could hardly run the reactor for one month before it clogged completely (c.f. Figure 2).

The product from the reactor was cooled to room temperature (using a water based shell-and-tube cooling system) and passed to a high pressure separator where gases were separated from the liquid. The resulting liquid was sent to an acidification vessel where it was acidified using sulfuric acid to a pH of around 5-6. A polar extracting solvent with a low boiling point (e.g. less than 100°C) was simultaneously added. The simultaneous addition of acidification agent and solvent led to a substantial reduction of foaming.

The mixture containing the acidified reactor product and the polar extracting solvent was sent to a decanter where three phases were obtained, namely an upper organic phase, a middle solid phase and a bottom aqueous phase. The upper phase containing the polar solvent and the bio-oil was sent for further conditioning to a guard reactor containing ion exchange material where salts present in the solution were removed.

The desalted organic phase containing the polar extracting solvent and the bio-oil was further mixed with a polar diluent with a high boiling point (e.g. more than 100°C) and sent to an evaporation unit. The low boiling polar extracting solvent was removed from the bio-oil and the diluent, and recycled back to the acidification vessel.

The mixture of bio-oil and diluent was sent to another reactor for further processing. The bio-oil yield was around 60 weight-% based on the mass of Klason lignin present in the feed to the reactor, calculated gravimetrically, ignoring any small content of hemicellulose in the black liquor and its possible contribution to the bio-oil as organic acids.

### Example 2

The lignin-depolymerization reactor was operated in the up-flow mode, i.e. the reactor was fed from the bottom and the product was withdrawn from the top.

The following process conditions were used:
Black liquor (solid content 48 weight-%) was passed to a container after filtration through a 70 µm filter. Water was added to the container for adjusting the solid content of the final mixture to 40 weight-%. The Klason lignin content of the final mixture was analyzed to be 150 g/kg. The mixture from the container was first pumped through a preheater operated before sending it to the reactor which was operated at a temperature of around 235°C. The reactor was pressurized with hydrogen. Hydrogen was added to the liquid feed at a constant flow rate of 30 l/h (STP conditions). The liquid feed mass flow was 2.3 kg/h. The pressure in the reactor was 110 bar.

By changing the flow direction within the reactor, the maximum running time of the reactor was extended to over 2 months and more without any increase of the pressure drop in the reactor. Apart from changing the flow direction, a temperature gradient was adjusted in the reactor wherein the temperature was around 20-30°C lower than the temperature in the upper part of the reactor. This further helped in avoiding any salt precipitation in the bottom of the reactor which is generally prone to clog. The reactor was flushed with water every 3 - 4 days.

The product from the reactor was further treated as described in Example 1. The yield of bio-oil was about 60 weight% based on the mass of Klason lignin present in the feed to the reactor, calculated gravimetrically, ignoring any small content of hemicellulose in the black liquor and its possible contribution to the bio-oil as organic acids.

## Claims

1. A process for producing bio-oil comprising the steps of:
(a) providing a lignin-containing composition having an alkaline pH, particularly a black liquor composition,
(b) passing the lignin-containing composition through a reactor under conditions of elevated temperature and elevated pressure, thereby causing depolymerization of the lignin, wherein a bio-oil composition comprising depolymerized lignin is obtained, wherein the reactor is operated in an up-flow mode, comprising introducing the composition into a lower portion of the reactor, passing the composition through the reactor in an upward direction and removing the composition from an upper portion of the reactor,
(c) optionally cooling the bio-oil composition and removing gaseous components therefrom,
(d) optionally adding at least one acidifying agent for pH adjustment, and optionally adding at least one organic extracting agent to the bio-oil composition,
(e) optionally filtering the oil phase,
(f) obtaining an oil phase from the bio-oil composition by phase-separation, wherein the oil phase comprises depolymerized lignin and optionally an organic extracting agent,
(g) optionally desalting the oil phase,
(h) optionally adding an organic diluent to the oil phase,
(i) optionally evaporating the organic extracting agent comprised in the oil phase, and
(j) obtaining a bio-oil comprising depolymerized lignin.

2. The process of claim 1 wherein the lignin-containing composition provided according to step (a) comprises a Klason lignin content of about 50 g/kg to about 300 g/kg, particularly of about 100 g/kg to about 200 g/kg based on the total volume of the composition

3. The process of claim 1 or 2 wherein in step (b) the composition is introduced into the bottom of the reactor, passed through the reactor in an upward direction and removed from the top of the reactor.

4. The process of any one of the preceding claims wherein in step (b) the reactor is operated with a vertical temperature gradient, particularly under conditions where a lower temperature is in the lower reactor portion and a higher temperature is in the upper reactor portion, wherein the temperature difference between the lower reactor portion and the upper reactor portion is particularly between about 5°C and about 60°C, more particularly between about 20°C and about 40°C.

5. The process of any one of the preceding claims wherein in step (b) the reactor is flushed with an aqueous liquid, e.g. after an operation period of about 2 to about 7 days.

6. The process of any one of the preceding claims wherein the organic extracting agent added in step (d) is a low-boiling organic solvent, particularly selected from esters, ethers, ketones and alcohols, e.g. ethyl acetate, methyl tetrahydrofuran, isopropyl acetate, and, or any combination thereof.

7. The process of any one of the preceding claims wherein the acidifying agent and the organic extracting agent are added substantially simultaneously in step (d) to the composition.

8. The process of any one of the preceding claims wherein in step (d) the acidifying agent and/or the organic extracting agent are added at an elevated temperature, e.g. at a temperature of about 50°C and up to below the boiling point of the extracting agent.

9. The process of any one of the preceding claims wherein desalting in step (g) comprises (i) adding an aqueous washing liquid to the oil phase and carrying out a phase-separation wherein the resulting mixture is separated into an oil phase and at least one aqueous phase, and/or (ii) contacting the oil phase with an adsorbent and/or an ion exchange material, wherein the aqueous washing liquid may comprise a metal chelator and/or an organic acid.

10. The process of claim 9 wherein desalting in step (g) comprises (i) contacting the oil phase with an aqueous washing liquid and carrying out a phase-separation wherein the resulting mixture is separated into an oil phase and at least one aqueous phase, and subsequently (ii) contacting the composition with an adsorbent and/or an ion exchange material, wherein the aqueous washing liquid may be at least partially recycled and reused several times, wherein the aqueous washing liquid may comprise a metal chelator and/or an organic acid.

11. The process of any one of the preceding claims wherein the organic diluent added in step (h) is a liquid having a higher boiling point than an extracting agent added in step (d).

12. The process of any one of the preceding claims wherein the depolymerized lignin obtained in step (j) has a weight average molecular weight of about 200 to about 2000 g/mol, particularly of about 250 to about 1000 g/mol, more particularly of 300 to about 800 g/mol.

13. The process of any one of the preceding claims wherein the bio-oil obtained in step (j) is further processed to a hydrocarbon product, wherein the bio-oil may be subjected to hydrotreatment.

14. The process of any one of the preceding claims which is operated continuously.

15. A unit for producing bio-oil comprising:
(a) a container for providing a lignin-containing composition having an alkaline pH, and optionally including means for adding further components to the composition,
(b) a reactor adapted for operation under conditions of elevated temperature and elevated pressure and for producing a bio-oil composition comprising depolymerized lignin,
wherein the reactor is adapted for operation in an up-flow mode, and comprises an inlet for introducing the lignin-containing composition from the container (a) into a lower reactor portion and an outlet for removing the bio-oil composition from an upper reactor portion,
(c) optionally a condenser adapted for cooling the bio-oil composition from the reactor (b) and for removing gaseous components therefrom,
(d) optionally a mixing device adapted for adding at least one acidifying agent for pH adjustment, and/or for adding at least one organic extracting agent to the composition from the reactor (b) or the condenser (c), if present,
(e) optionally a filtration device adapted for filtering the oil phase from the mixing device (d),
(f) a separator adapted for obtaining an oil phase from the bio-oil composition by phase separation, wherein the oil phase comprises depolymerized lignin and optionally an organic extracting agent,
(g) optionally a desalting device adapted for desalting the oil phase from the separator (f),
(h) optionally a mixing device adapted for adding an organic diluent to the oil phase from the separator (f),
(i) optionally an evaporator adapted for evaporating the organic extracting agent comprised in the oil phase from the separator (f), and optionally recycling the evaporated organic extracting agent to mixing device (d) and
(j) optionally a container for collecting a bio-oil comprising depolymerized lignin.
